(19) 

Europäisches
Patentamt
European
Patent Office
Office européen
des brevets

(11) **EP 3 454 537 A1**

(12) **EUROPEAN PATENT APPLICATION**

(43) Date of publication:
**13.03.2019 Bulletin 2019/11**

(21) Application number: **18192373.1**

(22) Date of filing: **04.09.2018**

(51) Int Cl.:
*H04N 1/40* (2006.01)          *H04N 1/393* (2006.01)
*G06T 3/40* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.09.2017   JP 2017173302**

(71) Applicant: **CANON KABUSHIKI KAISHA
Ohta-ku
Tokyo 146-8501 (JP)**

(72) Inventor: **IDO, Yoko
Ohta-ku, Tokyo 146-8501 (JP)**

(74) Representative: **Uffindell, Christine Helen
Canon Europe Ltd
European Patent Department
3 The Square
Stockley Park
Uxbridge, Middlesex UB11 1ET (GB)**

(54) **INFORMATION PROCESSING APPARATUS FOR PERFORMING IMAGE CONVERSION**

(57) According to the present invention, in a case where a plurality of corresponding pixels in a pre-converted original image is determined to include both a fully transparent pixel and a not fully transparent pixel, a color value of a pixel in a converted image is obtained based on the color value of the not fully transparent pixel among the corresponding pixels, and a degree of opacity of the pixel in the converted image is obtained by using the degrees of opacity of all the corresponding pixels.

**FIG.5**

START

IDENTIFY PROCESSING TARGET REGION IN DRAWING IMAGE ~S501

DOES PROCESSING TARGET REGION INCLUDE BOTH FULLY TRANSPARENT PIXEL AND NOT FULLY TRANSPARENT PIXEL? S502

NO

YES

CALCULATE COLOR VALUES (R', G', B') BY AVERAGING NOT FULLY TRANSPARENT PIXELS ~S503

CALCULATE PIXEL VALUE (R', G', B', A') BY AVERAGING ALL PIXELS S507

MOVE TO NEXT REGION OF INTEREST S508

CALCULATE TRANSPARENCY (A') BY AVERAGING ALL PIXELS ~S504

OUTPUT PIXEL VALUE (R', G', B', A') OF REDUCED PIXEL ~S505

LAST REGION? S506

NO

YES

END

EP 3 454 537 A1

**Description**

BACKGROUND OF THE INVENTION

Field of the Invention

The present invention relates to an information processing apparatus for performing image conversion, such as reduction and enlargement, on an image.

Description of the Related Art

There are two processing flows for an application running on a Microsoft Windows operating system to print a document by a printer via a printer driver: a Graphics Device Interface (GDI) print path and an Extensive Markup Language (XML) Paper Specification (XPS) print path. Among applications running on Windows operating systems are ones that output drawing data of GDI format and ones that output drawing data of XPS format as a drawing command for a document to be printed if a print instruction for the document is given. As employed herein, an application that outputs drawing data of GDI format will be referred to as a GDI application. An application that outputs drawing data of XPS format will be an XPS application.

In the GDI print path, a GDI printer driver (also referred to as a Version 3 (V3) printer driver) generates page description language (PDL) data (print job) processable by the printer from the drawing data of GDI format. In the XPS print path, a Version 4 (V4) printer driver, which has been supported since Windows 8, generates PDL data (print job) for the printer from the drawing data of XPS format. If the V4 printer driver is used to generate a print job of a document created by a GDI application, the drawing data of GDI format needs to be converted into drawing data of XPS format by the Microsoft XPS Document Converter (MXDC).

If the document to be printed includes a transparent object having transparency as color information, the MXDC converts a raster operation (ROP) drawing command to combine and draw a three-channel red, green, and blue (RGB) image with a mask image into a drawing command for a four-channel RGBA image including an alpha channel (A). The V4 printer driver then performs rendering processing on the four-channel RGBA image including the alpha channel A to generate a print job.

If a printer driver downsamples (reduces the resolution of) image data, bilinear or bicubic calculations are sometimes used to protect fine expressions such as periodical patterns, thin lines, and small-point characters. For example, if a 600 dpi RGB input image is converted into an RGB output image of 300 dpi in resolution, calculations for converting $2 \times 2$ pixels of the input image into a single pixel of the output image can be performed. In such a case, for example, the R, G, and B values of the $2 \times 2$ pixels in the input image are averaged and the respective average values are used as the R, G, and B values of the single pixel of the resolution-converted image.

However, if the input image is an RGBA image and resolution conversion is performed by a calculation method similar to the foregoing calculation method for an RGB image (by a method for simply averaging the respective R, G, B, and A values), unexpected color can appear on the converted image.

For example, suppose that $2 \times 2$ pixels of an input image include two fully transparent black pixels and two fully opaque white pixels on a white background. Suppose also that the R, G, B, and A values are expressed by 0% to 100% each. A fully transparent black pixel is expressed as (R, G, B, A) = (0, 0, 0, 0). A fully opaque white pixel is expressed as (R, G, B, A) = (100, 100, 100, 100). Without downsampling, the white of the background can be simply seen through the areas of the fully transparent black pixels in the input image. As a result, all the $2 \times 2$ pixels are drawn as white pixels. Now, suppose that the $2 \times 2$ pixels are downsampled and reduced to one pixel by simply averaging the respective R, G, B, and A values within the $2 \times 2$ pixels. The result is a semitransparent gray pixel of (R, G, B, A) = (50, 50, 50, 50). The single pixel downsampled by simply averaging the respective R, G, B, and A values is thus drawn as a gray pixel. That is, pixels drawn in white without downsampling are drawn as a gray pixel after the downsampling by simple averaging. A pixel of different color from in the original input image is thus drawn in the downsampled image.

Japanese Patent Application Laid-Open No. 2003-158748 discusses a technique for superimposing a data broadcast image on a television image, in which the data broadcast image is superimposed after resolution conversion (enlargement/reduction) according to the resolution of the television image. According to Japanese Patent Application Laid-Open No. 2003-158748, if a data broadcast image including fully transparent pixels and opaque pixels is converted to one half resolution, the values of the opaque pixels are used as pixel values after reduction processing at boundaries between the fully transparent pixels and the opaque pixels (not fully transparent pixels).

However, in Japanese Patent Application Laid-Open No. 2003-158748, since the R, G, B, A values of the opaque pixels are simply used at the boundaries between the fully transparent pixels and the opaque pixels during conversion to one half resolution, the color of the opaque pixels can be too exaggerated at the boundaries. For example, if a thin line or a black letter expressed by opaque pixels is reduced by half in resolution, the line width of the thin line or black letter in the converted image can look thicker than that in the original input image. If an outlined letter is expressed by fully transparent pixels, part of the outlined portion can be filled up due to the use of the pixel values of adjoining opaque pixels during resolution conversion.

## SUMMARY OF THE INVENTION

According to a first aspect of the present invention, there is provided an information processing apparatus as specified in claims 1 to 6. According to a second aspect of the present invention, there is provided an image processing method as specified in claims 7 to 12. According to a third aspect of the present invention, there is provided a computer program as specified in claim 13. According to a fourth aspect of the present invention, there is provided a computer-readable storage medium as specified in claim 14.

Further features of the present invention will become apparent from the following description of embodiments with reference to the attached drawings.

## BRIEF DESCRIPTION OF THE DRAWINGS

Fig. 1 is a diagram illustrating an apparatus configuration example to which a printing apparatus according to the present invention can be applied.
Fig. 2 is a block diagram illustrating a hardware configuration related to the printing system according to the present invention.
Fig. 3 is a block diagram illustrating a configuration of software modules related to print processing according to the present invention.
Fig. 4 is a flowchart of reduction processing execution determination processing.
Fig. 5 is a flowchart illustrating details of reduction processing according to a first embodiment.
Figs. 6A and 6B illustrate an example of a document to be processed.
Fig. 7 is an enlarged view illustrating the vicinity of a processing target region.
Fig. 8A illustrates an example of a result of application of the reduction processing according to the first embodiment to Fig. 7, and Fig. 8B illustrates an example in which unexpected color appears due to application of simple averaging.
Fig. 9 illustrates an example of the result of application of the reduction processing according to the first embodiment to the document of Figs. 6A and 6B.
Fig. 10 illustrates a comparative example in which simple average processing is applied to the document of Figs. 6A and 6B.
Fig. 11 illustrates a calculation example in a case where a processing target region having a size of 3 × 3 pixels is reduced to one pixel.
Fig. 12 illustrates an example of an interpolation processing target region and pixel values of interpolation results according to a second embodiment.

## DESCRIPTION OF THE EMBODIMENTS

A first embodiment for carrying out the present invention will be described below with reference to the drawings.

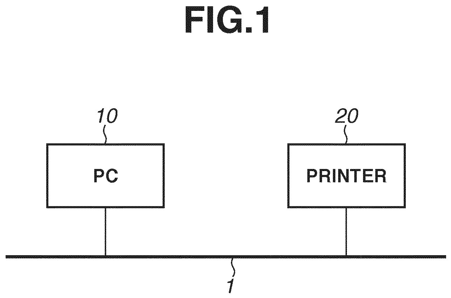

Fig. 1 is a diagram illustrating an apparatus configuration example to which a printing system according to the present embodiment can be applied. The present printing system includes an information processing apparatus (hereinafter, referred to as a "personal computer (PC)") 10 and an image forming apparatus (hereinafter, referred to as a "printer") 20. The PC 10 and the printer 20 are connected via a local area network (LAN) 1. The PC 10 and the printer 20 can transmit and receive data to/from each other. The LAN 1 may be a wired LAN or wireless LAN corresponding to Ethernet communication methods. The connection mode between the PC 10 and the printer 20 is not limited to a LAN.

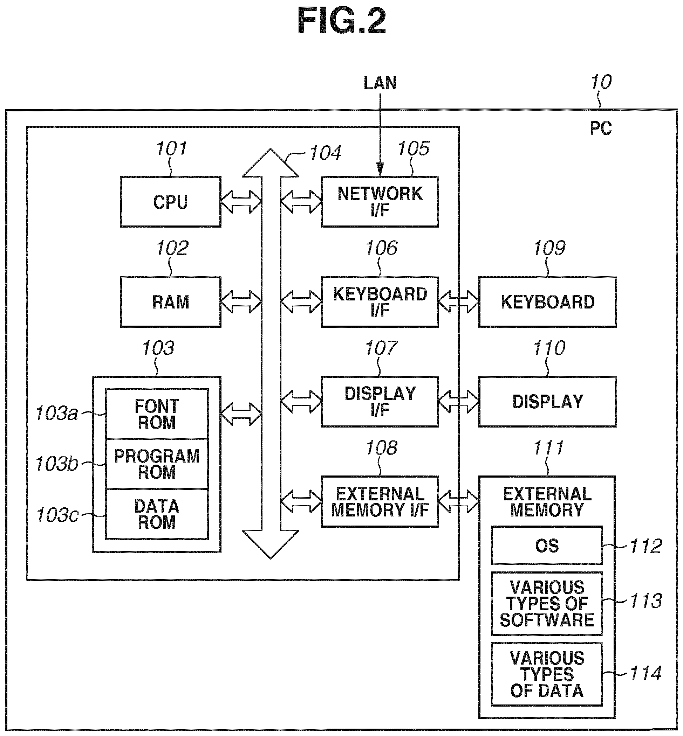

Fig. 2 is a block diagram illustrating a hardware configuration of the PC 10. A central processing unit (CPU) 101 performs overall control on devices connected to a system bus 104 by executing programs stored in a random access memory (RAM) 102. In other words, a computer (in particular, the CPU 101) functions as a processing unit for performing processes to be described below by executing programs stored in a computer-readable storage medium. The RAM 102 is a storage medium for temporarily storing data, and functions as a main memory and a work area of the CPU 101. A read-only memory (ROM) 103 stores various types of programs and data. The ROM 103 is divided into a font ROM 103a which stores various fonts, a program ROM 103b which stores a boot program and a basic input/output system (BIOS), and a data ROM 103c which stores various types of data. In the present embodiment, the area of the ROM 103 is internally divided for use. However, the font ROM 103a, the program ROM 103b, and the data ROM 103c may be configured as physically separate storage units. A network interface (I/F) 105 is connected to the LAN 1 and controls data communication between the PC 10 and external apparatuses. A keyboard I/F 106 controls input using a keyboard 109 and a not-illustrated pointing device (such as a mouse) from a user. A display I/F 107 controls output such as display to a display 110. An external memory I/F 108 controls access to an external memory 111 such as a hard disk (HD). The external memory 111 is a storage medium storing an operating system (OS) 112, various types of software 113 in charge of the printing system according to the present embodiment, and various types of data 114 such as a user file and an edit file. In the present embodiment, Microsoft Windows (registered trademark) 10 is used as the OS 112. The OS to be used is not limited thereto.

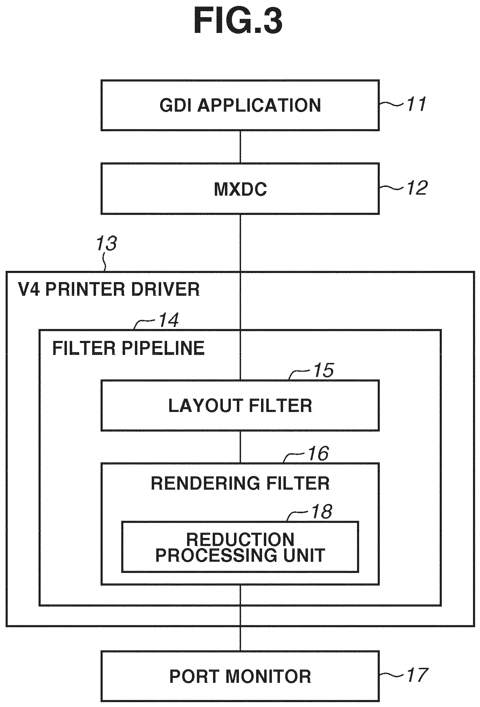

Fig. 3 is a block diagram illustrating a software configuration example of the PC 10 according to the present embodiment. Fig. 3 illustrates software modules related to rendering processing of a V4 printer driver among software modules included in the PC 10. The software models cause the computer to function as a unit for performing the processes to be described below.

A GDI application 11 is software for the user to create a document and give a print instruction. If a print instruction is given by the user, the GDI application 11 outputs drawing data of GDI format to an MXDC 12 as a drawing command of the document to be printed, by using a GDI application programming interface (API). The MXDC 12 converts the drawing data of GDI format received from the GDI application 11 into drawing data of XPS format. The MXDC 12 then outputs the converted drawing data of XPS format to a V4 printer driver 13.

The V4 printer driver 13 performs a series of processes for generating a print job according to a programming model called XPS print filter pipeline service. Specifically, the V4 printer driver 13 includes a filter pipeline 14 including a plurality of connected filters. The connected filters perform processing in order. More specifically, the filters successively perform processing so that the output of one filter serves as the input of the next filter connected. By such a mechanism, a print job (PDL data) to be output to the printer 20 is generated.

In the present embodiment, the filter pipeline 14 includes two filters, namely, a layout filter 15 for performing layout processing and a rendering filter 16 for performing rendering processing. The layout filter 15 performs layout processing, such as N-up processing for combining a plurality of pages onto a single sheet, on the input drawing data of XPS format. The layout filter 15 outputs the resulting laid-out drawing data of XPS format to the rendering filter 16. The rendering filter 16 applies image processing, such as edge enhancement, smoothing, enlargement/reduction processing, and rotation processing, to the input laid-out drawing data of XPS format, whereby drawing objects are converted into PDL data. For image reduction processing, the GDI application 11 may previously reduce the image before transmission to the V4 printer driver 13, or the V4 printer driver 13 may perform reduction processing. In the present embodiment, the reduction processing is performed by a reduction processing unit 18 included in the rendering filter 16 of the V4 printer driver 13. The PDL data converted by the rendering filter 16 is then output to a port monitor 17. The port monitor 17 transmits the PDL data to the printer 20 through the LAN 1.

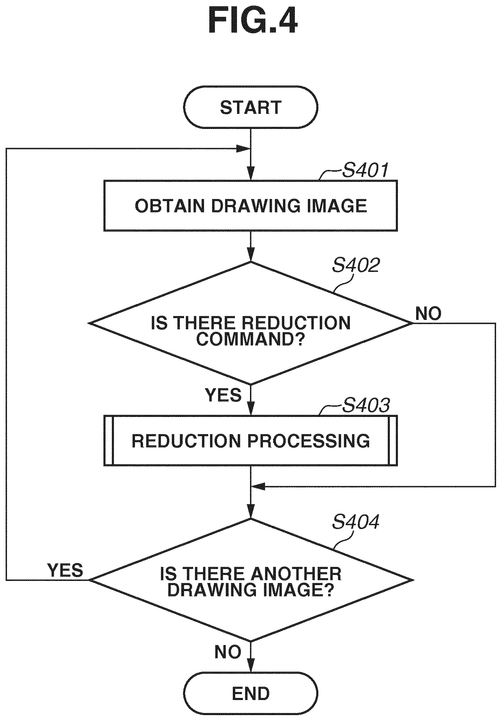

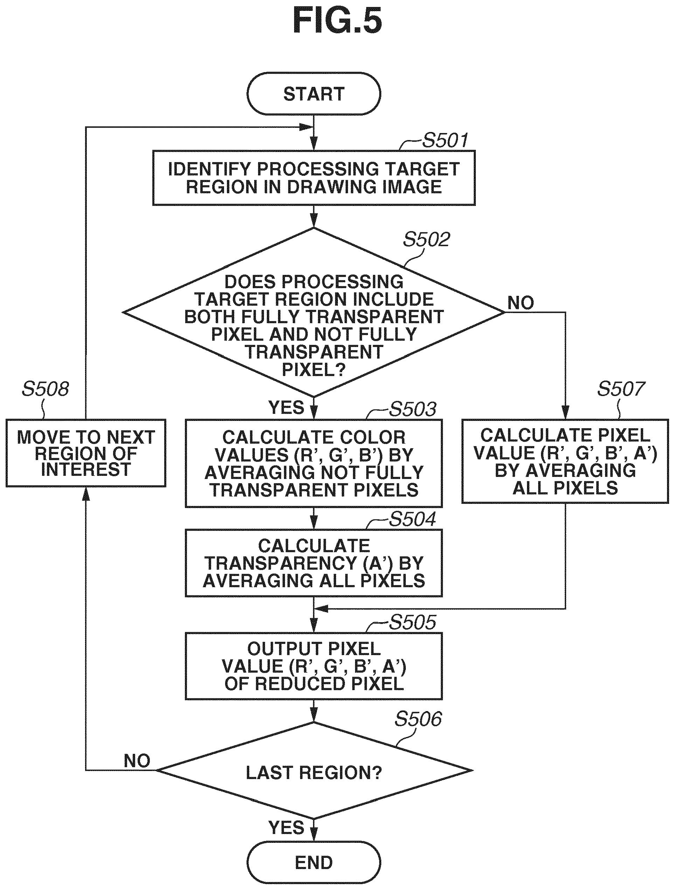

A method for performing image conversion to reduce a pixel size of a drawing image included in a document will be described below with reference to the flowcharts of Figs. 4 and 5. The pixel size, resolution, and an output size of a drawing image have a relationship of (the pixel size of the image) = (resolution) $\times$ (output size). For example, image conversion processing for reducing the pixel size of a drawing image is performed in reducing the image in resolution (downsampling) to reduce the data amount of the PDL data, or in reducing the print output size of a page image for N-up processing. The following description will be given by using as an example a case where the pixel size of a drawing image is reduced to reduce the resolution of the drawing image. However, the present embodiment can be similarly applied in a case where the pixel size of a drawing image is reduced to reduce the print output size of the drawing image. The processing described here is performed by the reduction processing unit 18.

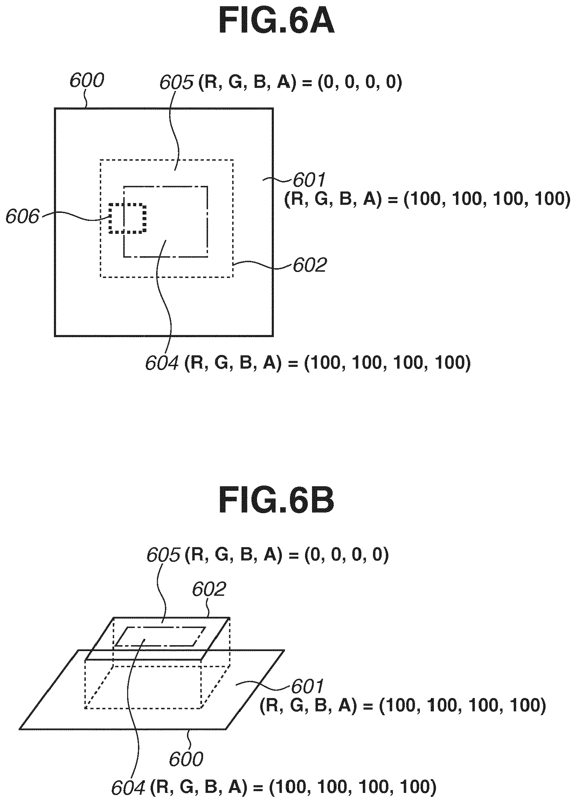

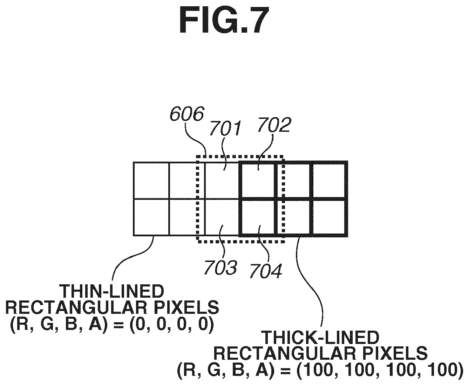

Figs. 6A and 6B illustrate an example of a document 600 to be processed. Suppose that a drawing image 602 is arranged on the document 600. Fig. 6A is a conceptual diagram illustrating a state where the drawing image 602 is drawn on a background 601 of the document 600 as seen from above. Fig. 6B is a conceptual diagram illustrating the state as seen obliquely. In the present embodiment, the values of (R, G, B, A) are expressed by 0% to 100% each. However, this is not restrictive. For example, the values may be expressed by 0 to 255 (values expressed in eight bits). In the present embodiment, the alpha value (A: degree of opacity) expressed by 0% to 100% indicates full opacity at 100% and full transparency at 0%. Suppose that the drawing image 602 in Figs. 6A and 6B is one such that a rectangular region 604 including pixels in fully opaque white (R, G, B, A) = (100, 100, 100, 100) is surrounded by a region 605 including pixels in fully transparent black (R, G, B, A) = (0, 0, 0, 0). The background 601 of the document 600 includes pixels in fully opaque white (R, G, B, A) = (100, 100, 100, 100). A region 606 illustrated in Fig. 6A indicates a position corresponding to Fig. 7 to be described below. Details will be described below.

In step S401, the reduction processing unit 18 obtains one of drawing images included in the document 600 as a processing target. In the example of Figs. 6A and 6B, the reduction processing unit 18 obtains the drawing image 602.

In step S402, the reduction processing unit 18 determines whether there is a reduction command (resolution reduction command) for the obtained drawing image 602. If the drawing image 602 is to be reduced in pixel size (YES in step S402), the processing proceeds to step S403. If not (NO in step S402), the processing proceeds to step S404.

In step S404, the reduction processing unit 18 determines whether there is another drawing image in the document 600. In this example, the document 600 includes only one drawing image 602 (NO in step S404). In such a case, the processing ends. If there is another drawing image (YES in step S404), the processing returns to step S401 and the reduction processing unit 18 continues processing.

Fig. 5 is a flowchart for describing the reduction processing of step S403 in detail. The following description will be given by using as an example a case where 2 × 2 pixels of an original drawing image are reduced to a single pixel.

In step S501, the reduction processing unit 18 identifies a processing target region having a size of 2 × 2 pixels in the drawing image 602. The pixels in the processing target region correspond to a plurality of pre-converted pixels used in calculating a pixel value of one pixel in a reduction-converted drawing image. Fig. 7 is an enlarged view illustrating the vicinity of the region 606 in the drawing image 602 at the time when the region 606 is identified as the processing target region. The region 606 includes fully transparent black pixels of (R, G, B, A) = (0, 0, 0, 0) and fully opaque white pixels of (R, G, B, A) = (100, 100, 100, 100). The two pixels in the left half of the region 606 (pixels 701 and 703 represented by thin-lined rectangles) are fully transparent black pixels. The two pixels in the right half of the region 606 (pixels 702 and 704 represented by thick-lined rectangles) are fully opaque white pixels.

In step S502, the reduction processing unit 18 determines whether the processing target region (i.e., a plurality of corresponding pixels before reduction conversion) includes both a fully transparent pixel (pixel of A = 0) and a not fully transparent pixel (pixel of A ≠ 0). As described above, the region 606 includes the fully transparent pixels and the not fully transparent pixels (YES in step S502). The processing thus proceeds to step S503. If the processing target region only includes fully transparent pixels or only includes not fully transparent pixels (NO in step S502), the processing proceeds to step S507.

In step S503, the reduction processing unit 18 calculates the color values of the reduced pixel by averaging the respective color values R, G, and B of the not fully transparent pixels among the pixels included in the processing target region. In the region 606, the pixels 702 and 704 are the not fully transparent pixels. The color values R', G', and B' of the reduced pixel are:

$$R' = (100 + 100)/2 = 100,$$

$$G' = (100 + 100)/2 = 100,$$

and

$$B' = (100 + 100)/2 = 100.$$

In step S504, the reduction processing unit 18 calculates the transparency (the value of the alpha channel) after reduction by averaging the values of the alpha channel of all the pixels in the processing target region. In the example of the region 606, the alpha value A' of the reduced pixel is obtained by averaging the alpha values A (A values) of all the pixels 701 to 704:

$$A' = (0 + 100 + 0 + 100)/4 = 50.$$

In step S507, the reduction processing unit 18 calculates the pixel value (R', G', B', A') of the reduced pixel by individually obtaining the respective average values of R, G, B, and A based on the pixel values (R, G, B, A) of all the pixels in the processing target region.

In step S505, the reduction processing unit 18 outputs the pixel values (R', G', B', A') of the reduced pixel based on the calculation results of steps S503 and S504 or those of step S507. In the example of the region 606, the pixel value of the reduced pixel is (R', G', B', A') = (100, 100, 100, 50).

In step S506, the reduction processing unit 18 determines whether the current processing target region is the last region to perform the reduction processing on. If the current processing target region is the last region (YES in step S506), the processing ends. If there is another region to be processed (NO in step S506), the processing proceeds to step S508. In step S508, the reduction processing unit 18 moves to the next region of interest. In the example of Fig. 7, after the processing of the region 606 is completed, the processing proceeds to step S508. The reduction processing unit 18 thus identifies the next processing target region, with the pixel on the right of the pixel 702 as the top left pixel of the next processing target region having a size of 2 × 2 pixels.

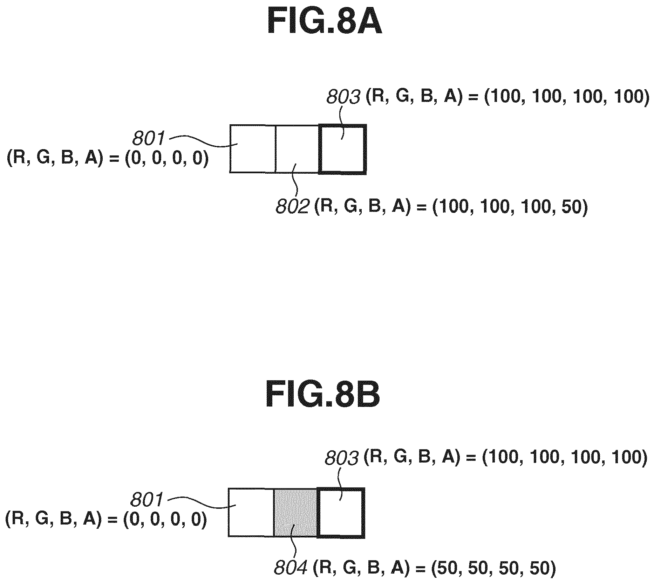

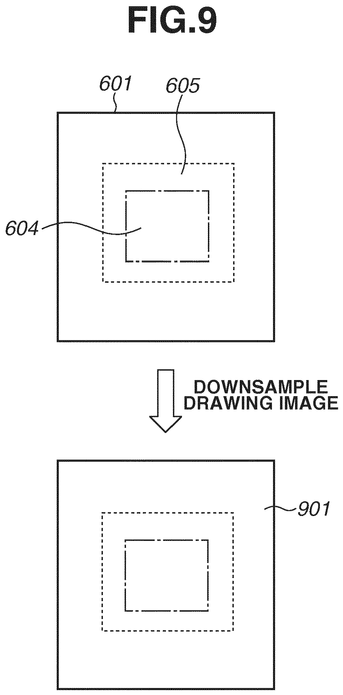

Fig. 8A illustrates the result of reproduction processing of the portion illustrated in Fig. 7 by the processing of Fig. 5. All the pixels in the 2 × 2 pixel region located at the left in Fig. 7 have a pixel value (R, G, B, A) = (0, 0, 0, 0). By the processing of step S507, this left region is reduced to a pixel 801 of Fig. 8A with a pixel value (R, G, B, A) = (0, 0, 0, 0). By the processing of steps S503 and S504, the region 606 in Fig. 7 is reduced to a pixel 802 having a pixel value (R, G, B, A) = (100, 100, 100, 50). All the pixels in the 2 × 2 pixel region located at the right in Fig. 7 have a pixel value (R, G, B, A) = (100, 100, 100, 100). By the processing of step S507, this right region is reduced to a pixel 803 of Fig. 8A with a pixel value (R, G, B, A) = (100, 100, 100, 100). Fig. 9 is a conceptual diagram illustrating a case where the processing of Fig. 5 is performed on the document 600 illustrated in Fig. 6A (document on which the drawing image 602 including the fully opaque white region 604 and the fully transparent black region 605 is arranged) to downsample the drawing image 602. As illustrated in Fig. 8A, the boundary between the regions 604 and 605 is reduced to semitransparent white like the pixel 802. The background 601 of the document 600 is fully opaque white. If the downsampled drawing image is arranged on the background 601, the resulting document 901 is all drawn in white as with before the downsampling.

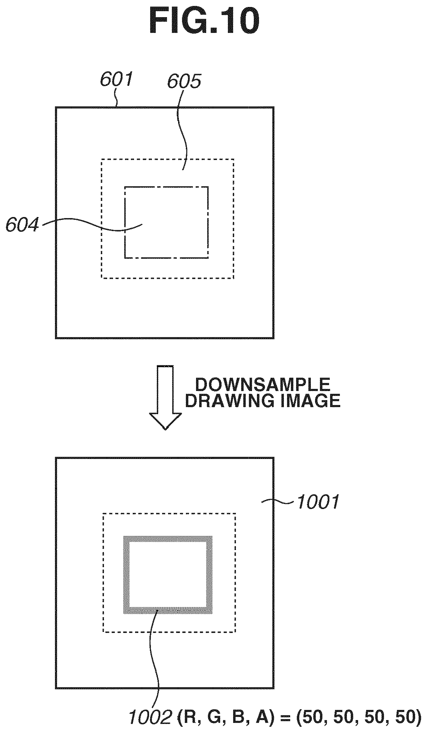

Suppose that the processing of the foregoing steps S503 and S504 is not applied, and processing for obtaining a pixel value by simple averaging like step S507 is applied instead even if the processing target region includes both a fully transparent pixel and a not fully transparent pixel. Fig. 8B illustrates the result. That is, as described in the description of the related art, if simple averaging like step S507 is applied to all the processing target regions, there can appear semitransparent gray pixels of (R, G, B, A) = (50, 50, 50, 50) like the pixel 804 in Fig. 8B. In other words, if the pixel values of the reduced pixels are obtained by simply averaging all the pixels including even fully transparent ones, semitransparent gray pixels 1002 appear at the downsampled boundary between the regions 604 and 605 as illustrated in Fig. 10. If the pixel values after downsampling are thus obtained by simply averaging all the pixels in the processing target regions, part of the resulting document 1001 is drawn in gray unlike before the downsampling.

According to the present embodiment, as illustrated in Fig. 8A, if image conversion is performed to reduce the drawing image 602, the converted pixel 802 appearing at the boundary between the fully transparent pixels and the not fully transparent pixels is fully transparent. As is evident from comparison between Figs. 9 and 10, according to the present embodiment, boundary regions including both a fully transparent pixel and a not fully transparent pixel can be reduced without the occurrence of color (gray in Fig. 10) that is not supposed to be drawn.

In the foregoing example, a processing target region having a size of 2 × 2 pixels is described to be reduced (downsampled) to a single pixel. However, the size of the processing target region is not limited to 2 × 2 pixels. In the foregoing example, the drawing image 602 is described to include fully transparent black pixels and fully opaque white pixels. However, this is not restrictive. Processing similar to that of the flowchart of Fig. 5 can be applied even if semitransparent pixels or colors other than black or white are included.

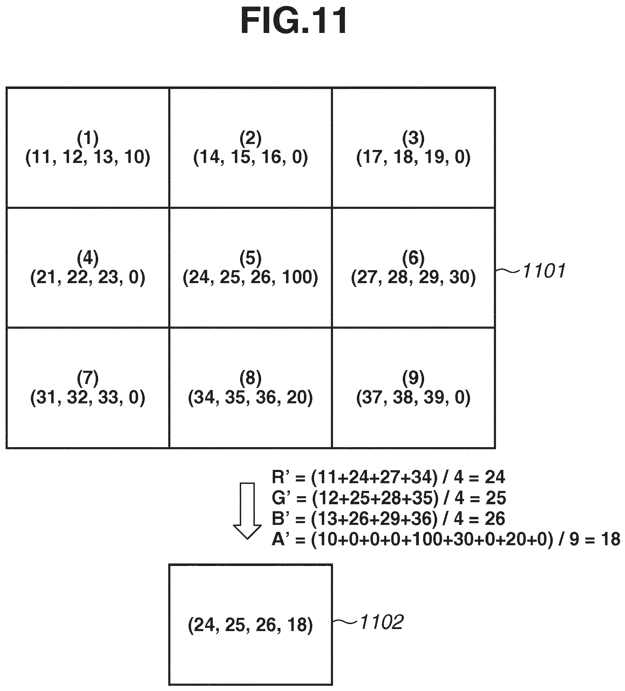

Fig. 11 illustrates an example of a processing target region 1101 having a size of 3 × 3 pixels. The pixels have respective different pixel values. Pixels (2), (3), (4), (7), and (9) are fully transparent. Pixels (1), (6), and (8) are semitransparent. Pixel (5) is opaque. If such a processing target region 1101 is reduced to calculate a single pixel value 1102, the color values R', G' and B' are calculated from the pixel values of the four pixels (1), (5), (6), and (8) which are not fully transparent:

$$R' = (11 + 24 + 27 + 34)/4 = 24,$$

$$G' = (12 + 25 + 28 + 35)/4 = 25,$$

and

$$B' = (13 + 26 + 29 + 36)/4 = 26.$$

The alpha value A' is calculated from all the nine pixels:

$$A' = (10 + 0 + 0 + 0 + 100 + 30 + 0 + 20 + 0)/9 = 18.$$

Each calculated value of (R', G', B', A') is rounded off to the closest whole number. However, this is not restrictive, and each calculated value of (R', G', B', A') could be rounded up or rounded down, for example. The pixel value 1102 after reduction is thus (R', G', B', A') = (24, 25, 26, 18).

In Fig. 5 described above, if all the pixels in the processing target region are fully transparent pixels (NO in step S502), the processing proceeds to step S507. In step S507, the reduction processing unit 18 calculates the pixel value after reduction by individually averaging R, G, B, and A based on the pixel values of all the pixels in the processing target region. However, if the processing target region only includes fully transparent pixels, the pixel value (A') after reduction is also a fully transparent one. The color values R, G, and B therefore do not need to be averaged. That is, if all the pixels in the processing target region are fully transparent pixels, the pixel value after reduction may be set to a predetermined pixel value (for example, (R', G', B', A') = (100, 100, 100, 0)) without averaging.

In the first embodiment, processing during image conversion for reducing the pixel size of a drawing image has been described. In a second embodiment, a case where the present invention is applied to enlarging the pixel size of a drawing image will be described.

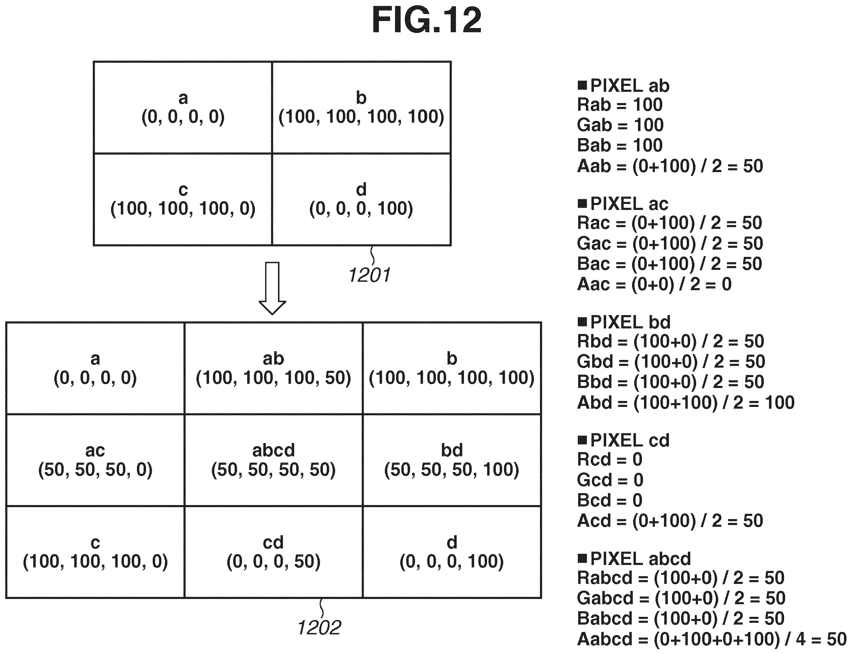

Fig. 12 is a diagram for describing a case where a processing target region 1201 having a size of 2 × 2 pixels in a drawing image is enlarged to a region 1202 having a size of 3 × 3 pixels. The numerals in Fig. 12 indicate the values of (R, G, B, A).

Suppose that pixels a to d constituting the processing target region 1201 have the illustrated pixel values. Pixels a to d of the enlarged region 1202 then inherit the pixel values from pixels a to d of the processing target region 1201. The pixel values of pixels ab, cd, ac, bd, and abcd in the enlarged region 1202 are obtained by performing interpolation calculation based on the pixel values of pixels a to d. Here, the calculation method is changed depending on whether or not the original pixels used for interpolation calculation include both a fully transparent pixel and a not fully transparent pixel. Specifically, in obtaining the pixel value of each pixel after enlargement conversion, whether the original pixels used in performing the interpolation calculation of the pixel value of the pixel includes both a fully transparent pixel and a not fully transparent pixel is determined as in the processing of step S502 in Fig. 5. If both are determined to be included, the color values R, G, and B (RGB values) of the pixel to be interpolated are obtained based on the RGB values of the not fully transparent pixel(s) as in the processing of step S503. The alpha value A of the pixel to be interpolated is further obtained based on the alpha values A of all the pixels as in the processing of step S504. On the other hand, if, in step S502, both pixels are determined to not be included, the R, G, B, and A values of the pixel to be interpolated are obtained based on the averages of the respective R, G, B, and A values of all the original pixels used for the interpolation calculation as in step S507. More specifically, the pixel values of the pixels to be interpolated are calculated in the following manner.

The pixel value of pixel ab is calculated based on pixel a which is fully transparent and pixel b which is not fully transparent. The RGB values of pixel ab are therefore interpolated based on the RGB values of the not fully transparent pixel b. The A value of pixel ab is interpolated based on the average of the A values of both pixels a and b. Suppose that pixel a has a pixel value (Ra, Ga, Ba, Aa) = (0, 0, 0, 0) and pixel b has a pixel value (Rb, Gb, Bb, and Ab) = (100, 100, 100, 100). Then, the R, G, B, and A values, or pixel value (Rab, Gab, Bab, Aab), of the interpolated pixel ab are given by:

Rab = Rb = 100,
Gab = Gb = 100,
Bab = Bb = 100, and

$$Aab = (Aa + Ab)/2 = (0 + 100)/2 = 50.$$

If the RGB values of pixel ab are also calculated based on the averages of the RGB values of both pixels a and b, the resulting pixel is a semitransparent gray pixel of (Rab, Gab, Bab, Aab) = (50, 50, 50, 50). By such a calculation method, both pixels a and b appear as white pixels since a white pixel on the background is drawn for pixel a which is a fully transparent pixel, and pixel b is a fully opaque white pixel. However, the intervening pixel ab is drawn as a gray pixel. In contrast, by the foregoing processing of the second embodiment, (Rab, Gab, Bab, Aab) = (100, 100, 100, 50), i.e., pixel ab is drawn as a white pixel. According to the present embodiment, a gray pixel that is not supposed to be drawn can be prevented from being drawn in generating an interpolated pixel between a fully transparent pixel and a not fully transparent, white pixel.

The pixel value of pixel ac is calculated based on the fully transparent pixel a and the fully transparent pixel c. The R, G, B, and A values of pixel ac are therefore calculated based on the averages of the respective R, G, B, and A values of pixels a and c.

The pixel value of pixel bd is calculated based on the not fully transparent pixel b and the not fully transparent pixel d. The R, G, B, and A values of pixel bd are therefore calculated based on the averages of the respective R, G, B, and A values of pixels b and d.

The pixel value of pixel cd is calculated based on the fully transparent pixel c and the not fully transparent pixel d. The RGB values of pixel cd are therefore interpolated based on the RGB values of the not fully transparent pixel d.

The A value of pixel cd is interpolated based on the average of the A values of both pixels c and d.

The pixel value of pixel abcd is calculated based on the fully transparent pixels a and c and the not fully transparent pixels b and d. The RGB values of pixel abcd are therefore interpolated based on the RGB values of the not fully transparent pixels b and d. The A value of pixel abcd is interpolated based on the average of the A values of all pixels a, b, c, and d.

In the second embodiment, processing during linear enlargement conversion of a drawing image has been described. However, the present embodiment can also be applied to nonlinear image deformation processing.

As has been described in the first and second embodiments, according to an embodiment of the present invention, in a case where image conversion such as reduction and enlargement is performed, whether a plurality of corresponding pixels in the original image to be used in calculating a pixel value of each pixel of the converted image includes both a fully transparent pixel and a not fully transparent pixel is determined. If both are determined to be included, the RGB values of the pixel in the converted image (after reduction conversion or enlargement conversion) are obtained based on those of each pixel among the corresponding pixels that is not fully transparent. Such a configuration can prevent adverse effects from the RGB values set in fully transparent (A = 0) pixels in performing image conversion such as reduction and enlargement.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of this invention.

**Claims**

1. An information processing apparatus for performing image conversion on an image, the information processing apparatus comprising:

   determining means configured to determine whether a plurality of corresponding pixels in a pre-converted image to be used to obtain a pixel value of each pixel in a converted image includes both a fully transparent pixel and a not fully transparent pixel; and
   obtaining means configured to obtain, in a case where the determining means determines that the plurality of corresponding pixels include both a fully transparent pixel and a not fully transparent pixel, a color value of the pixel in the converted image by using the color value of the not fully transparent pixel among the plurality of corresponding pixels, and to obtain a degree of opacity of the pixel in the converted image by using the degrees of opacity of all the plurality of corresponding pixels.

2. The information processing apparatus according to claim 1, wherein, in a case where the determining means does not determine that the plurality of corresponding pixels include both a fully transparent pixel and a not fully transparent pixel, the obtaining means is configured to obtain the color value of the pixel in the converted image by using the color values of all the plurality of corresponding pixels, and to obtain the degree of opacity of the pixel in the converted image by using the degrees of opacity of all the plurality of corresponding pixels.

3. The information processing apparatus according to claim 1 or claim 2, wherein, in a case where the determining means determines that the plurality of corresponding pixels include fully transparent pixels only, the obtaining means is configured to set the color value of the pixel in the converted image to a predetermined value and the degree of opacity to fully transparent.

4. The information processing apparatus according to any preceding claim,
wherein, in a case where the image conversion is image conversion for reducing the image, the determining means is configured to determine whether a processing target region corresponding to the plurality of corresponding pixels in the pre-converted image includes both a fully transparent pixel and a not fully transparent pixel, and
wherein, in a case where the determining means determines that the processing target region includes both a fully transparent pixel and a not fully transparent pixel, the obtaining means is configured to obtain the color value of the pixel in the converted image by using only the color value of the not fully transparent pixel in the processing target region, and to obtain the degree of opacity of the pixel in the converted image by using the degrees of opacity of all the pixels in the processing target region.

5. The information processing apparatus according to any preceding claim,
wherein, in a case where the image conversion is image conversion for enlarging the image, the determining means is configured to determine whether a plurality of corresponding pixels in the pre-converted image to be used for interpolation in obtaining the pixel value of each pixel in the converted image includes both a fully transparent pixel and a not fully transparent pixel, and
wherein, in a case where the determining means determines that the plurality of corresponding pixels include both a fully transparent pixel and a not fully transparent pixel, the obtaining means is configured to obtain the color value of the pixel in the converted image by using only the color value of the not fully transparent pixel among the plurality of corresponding pixels, and to obtain the degree of opacity of the pixel in the converted image by using the degrees of opacity of all the plurality of corresponding pixels.

6. The information processing apparatus according to any preceding claim, wherein the color value is an RGB value, and the degree of opacity is an alpha value.

7. An information processing method for performing image conversion on an image, the method comprising:

determining whether a plurality of corresponding pixels in a pre-converted image to be used to obtain a pixel value of each pixel in a converted image includes both a fully transparent pixel and a not fully transparent pixel, obtaining, in a case where it is determined that the plurality of corresponding pixels include both a fully transparent pixel and a not fully transparent pixel, a color value of the pixel in the converted image by using the color value of the not fully transparent pixel among the plurality of corresponding pixels, and a degree of opacity of the pixel in the converted image by using the degrees of opacity of all the plurality of corresponding pixels.

8. An information processing method according to claim 7, wherein, in a case where it is not determined that the plurality of corresponding pixels include both a fully transparent pixel and a not fully transparent pixel, the method comprises obtaining the color value of the pixel in the converted image by using the color values of all the plurality of corresponding pixels and the degree of opacity of the pixel in the converted image by using the degrees of opacity of all the plurality of corresponding pixels.

9. An information processing method according to claim 7 or claim 8, wherein, in a case where it is determined that the plurality of corresponding pixels include fully transparent pixels only, the processor sets the color value of the pixel in the converted image to a predetermined value and the degree of opacity to fully transparent.

10. An information processing method according to any one of claim 7 to claim 9,
wherein, in a case where the image conversion is image conversion for reducing the image, the determining step is configured to determine whether a processing target region corresponding to the plurality of corresponding pixels in the pre-converted image includes both a fully transparent pixel and a not fully transparent pixel, and
wherein, in a case where it is determined that the processing target region includes both a fully transparent pixel and a not fully transparent pixel, the obtaining step is configured to obtain the color value of the pixel in the converted image by using only the color value of each pixel in the processing target region that is not fully transparent and the degree of opacity of the pixel in the converted image by using the degrees of opacity of all the pixels in the processing target region.

11. An information processing method according to any one of claim 7 to claim 10,
   wherein, in a case where the image conversion is image conversion for enlarging the image, the determining step is configured to determine whether a plurality of corresponding pixels in the pre-converted image to be used for interpolation in obtaining the pixel value of each pixel in the converted image includes both a fully transparent pixel and a not fully transparent pixel, and
   wherein, in a case where it is determined that the plurality of corresponding pixels include both a fully transparent pixel and a not fully transparent pixel, the obtaining step is configured to obtain the color value of the pixel in the converted image by using only the color value of the not fully transparent pixel among the plurality of corresponding pixel, and to obtain the degree of opacity of the pixel in the converted image by using the degrees of opacity of all the plurality of corresponding pixels.

12. An information processing method according to any one of claim 7 to claim 11, wherein the color value is an RGB value, and the degree of opacity is an alpha value.

13. A computer program comprising instructions which, when the program is executed by a computer, cause the computer to carry out the method of any one of claims 7 to 12.

14. A computer-readable storage medium storing a program according to claim 13.

# FIG.1

# FIG.2

LAN

10

PC

101 CPU

104

105 NETWORK I/F

102 RAM

106 KEYBOARD I/F

109 KEYBOARD

103
103a FONT ROM
103b PROGRAM ROM
103c DATA ROM

107 DISPLAY I/F

110 DISPLAY

108 EXTERNAL MEMORY I/F

111 EXTERNAL MEMORY

OS — 112

VARIOUS TYPES OF SOFTWARE — 113

VARIOUS TYPES OF DATA — 114

# FIG.3

```
┌─────────────────────────────┐
│       GDI APPLICATION       │ ～11
└─────────────────────────────┘
              │
┌─────────────────────────────┐
│            MXDC             │ ～12
└─────────────────────────────┘
              │
  13
┌──────────────────────────────────────────┐
│ V4 PRINTER DRIVER                         │
│         ┌─14                              │
│  ┌─────────────────────────────────────┐ │
│  │ FILTER PIPELINE                     │ │
│  │                    ┌─15             │ │
│  │   ┌───────────────────────────────┐│ │
│  │   │        LAYOUT FILTER          ││ │
│  │   └───────────────────────────────┘│ │
│  │                 │  ┌─16            │ │
│  │   ┌───────────────────────────────┐│ │
│  │   │     RENDERING FILTER          ││ │
│  │   │              ┌─18             ││ │
│  │   │  ┌─────────────────────────┐  ││ │
│  │   │  │       REDUCTION         │  ││ │
│  │   │  │   PROCESSING UNIT       │  ││ │
│  │   │  └─────────────────────────┘  ││ │
│  │   └───────────────────────────────┘│ │
│  └─────────────────────────────────────┘ │
└──────────────────────────────────────────┘
              │
┌─────────────────────────────┐
│        PORT MONITOR         │ ～17
└─────────────────────────────┘
```

# FIG.4

```
                    START
                      │
    ┌─────────────────┤
    │                 ▼         ┌─S401
    │        OBTAIN DRAWING IMAGE
    │                 │
    │                 ▼            S402
    │                              NO
    │        IS THERE REDUCTION ──────┐
    │            COMMAND?             │
    │                 │               │
    │               YES  ┌─S403       │
    │        REDUCTION PROCESSING     │
    │                 │◄──────────────┘
    │                 ▼        S404
    │   YES   IS THERE ANOTHER
    └─────────  DRAWING IMAGE?
                      │
                     NO
                      ▼
                    END
```

# FIG.5

START

IDENTIFY PROCESSING TARGET
REGION IN DRAWING IMAGE ⟋S501

DOES PROCESSING
TARGET REGION INCLUDE
BOTH FULLY TRANSPARENT
PIXEL AND NOT FULLY
TRANSPARENT
PIXEL? ⟋S502

NO

YES ⟋S503

CALCULATE COLOR
VALUES (R', G', B') BY
AVERAGING NOT FULLY
TRANSPARENT PIXELS

S507

CALCULATE PIXEL
VALUE (R', G', B', A')
BY AVERAGING
ALL PIXELS

⟋S504

CALCULATE
TRANSPARENCY (A') BY
AVERAGING ALL PIXELS

⟋S505

OUTPUT PIXEL
VALUE (R', G', B', A')
OF REDUCED PIXEL

S506

LAST REGION?

NO

S508

MOVE TO NEXT
REGION OF
INTEREST

YES

END

# FIG.6A

*600*  *605* (R, G, B, A) = (0, 0, 0, 0)

*601*
(R, G, B, A) = (100, 100, 100, 100)

*606*

*602*

*604* (R, G, B, A) = (100, 100, 100, 100)

# FIG.6B

*605* (R, G, B, A) = (0, 0, 0, 0)

*602*

*601*
(R, G, B, A) = (100, 100, 100, 100)

*600*

*604* (R, G, B, A) = (100, 100, 100, 100)

# FIG.7

606 701 702

THIN-LINED
RECTANGULAR PIXELS
(R, G, B, A) = (0, 0, 0, 0)

703 704

THICK-LINED
RECTANGULAR PIXELS
(R, G, B, A) = (100, 100, 100, 100)

# FIG.8A

803 (R, G, B, A) = (100, 100, 100, 100)

801
(R, G, B, A) = (0, 0, 0, 0)

802 (R, G, B, A) = (100, 100, 100, 50)

# FIG.8B

803 (R, G, B, A) = (100, 100, 100, 100)

801
(R, G, B, A) = (0, 0, 0, 0)

804 (R, G, B, A) = (50, 50, 50, 50)

# FIG.9

DOWNSAMPLE
DRAWING IMAGE

# FIG.10

*601*  *605*

*604*

DOWNSAMPLE
DRAWING IMAGE

*1001*

*1002* (R, G, B, A) = (50, 50, 50, 50)

# FIG.11

| (1)<br>(11, 12, 13, 10) | (2)<br>(14, 15, 16, 0) | (3)<br>(17, 18, 19, 0) |
|---|---|---|
| (4)<br>(21, 22, 23, 0) | (5)<br>(24, 25, 26, 100) | (6)<br>(27, 28, 29, 30) |
| (7)<br>(31, 32, 33, 0) | (8)<br>(34, 35, 36, 20) | (9)<br>(37, 38, 39, 0) |

~1101

R' = (11+24+27+34) / 4 = 24
G' = (12+25+28+35) / 4 = 25
B' = (13+26+29+36) / 4 = 26
A' = (10+0+0+0+100+30+0+20+0) / 9 = 18

(24, 25, 26, 18) ~1102

# FIG.12

| a<br>(0, 0, 0, 0) | b<br>(100, 100, 100, 100) |
|---|---|
| c<br>(100, 100, 100, 0) | d<br>(0, 0, 0, 100) |

*1201*

↓

| a<br>(0, 0, 0, 0) | ab<br>(100, 100, 100, 50) | b<br>(100, 100, 100, 100) |
|---|---|---|
| ac<br>(50, 50, 50, 0) | abcd<br>(50, 50, 50, 50) | bd<br>(50, 50, 50, 100) |
| c<br>(100, 100, 100, 0) | cd<br>(0, 0, 0, 50) | d<br>(0, 0, 0, 100) |

*1202*

■PIXEL ab
Rab = 100
Gab = 100
Bab = 100
Aab = (0+100) / 2 = 50

■PIXEL ac
Rac = (0+100) / 2 = 50
Gac = (0+100) / 2 = 50
Bac = (0+100) / 2 = 50
Aac = (0+0) / 2 = 0

■PIXEL bd
Rbd = (100+0) / 2 = 50
Gbd = (100+0) / 2 = 50
Bbd = (100+0) / 2 = 50
Abd = (100+100) / 2 = 100

■PIXEL cd
Rcd = 0
Gcd = 0
Bcd = 0
Acd = (0+100) / 2 = 50

■PIXEL abcd
Rabcd = (100+0) / 2 = 50
Gabcd = (100+0) / 2 = 50
Babcd = (100+0) / 2 = 50
Aabcd = (0+100+0+100) / 4 = 50

EP 3 454 537 A1

Europäisches
Patentamt

European
Patent Office

Office européen
des brevets

# EUROPEAN SEARCH REPORT

Application Number

EP 18 19 2373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/078227 A1 (CHANG YI-SHU [TW] ET AL) 13 April 2006 (2006-04-13) * the whole document * | 1-14 | INV. H04N1/40 H04N1/393 G06T3/40 |
| Y | US 2007/222790 A1 (WINGER LOWELL L [CA]) 27 September 2007 (2007-09-27) * paragraph [0016] - paragraph [0059]; claim 1; figures 1-6 * | 1-14 | |
| Y | US 6 597 819 B1 (ITO WATARU [JP]) 22 July 2003 (2003-07-22) * column 7 - column 12 * | 1-14 | |
| A | US 2009/289969 A1 (WU JIUN-YUAN [TW]) 26 November 2009 (2009-11-26) * abstract * | 1-14 | |

TECHNICAL FIELDS
SEARCHED      (IPC)

H04N
G06T

The present search report has been drawn up for all claims

| Place of search | Date of completion of the search | Examiner |
|---|---|---|
| The Hague | 8 January 2019 | Wozniak, Doris Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 19 2373

08-01-2019

| Patent document cited in search report | Publication date | Patent family member(s) | Publication date |
|---|---|---|---|
| US 2006078227 A1 | 13-04-2006 | TW      I256022  B<br>US  2006078227  A1 | 01-06-2006<br>13-04-2006 |
| US 2007222790 A1 | 27-09-2007 | NONE | |
| US 6597819   B1 | 22-07-2003 | NONE | |
| US 2009289969 A1 | 26-11-2009 | CN    101588462  A<br>TW    200949760  A<br>US  2009289969  A1 | 25-11-2009<br>01-12-2009<br>26-11-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003158748 A